# EUROPEAN PATENT APPLICATION

(11) **EP 1 357 494 A1**
(43) Date of publication of application: **29.10.2003**
(21) Application number: 01995020.3
(22) Date of filing: 26.12.2001
(51) Int. Cl.: G06F 17/60

(54) **COMPUTER-READABLE INFORMATION STORAGE MEDIUM WHERE CONTENT DATA IS STORED AND CONTENT CHARGING SYSTEM**

(30) Priority: 26.12.2000 JP 2000396068
(71) Applicant: Foursis Business Promotion Kabushiki Kaisha, Tokyo 101-0045 (JP)
(72) Inventor: NAKANISHI, Naoya, c/o Foursis Business Promotion, Chiyoda-ku, Tokyo 101-0045 (JP); TOYOTA, Yuichi, c/o KK CCP, Chuo-ku, Tokyo 104-0031 (JP)
(74) Representative: Klunker . Schmitt-Nilson . Hirsch
(86) International application number: JP0111505
(87) International publication number: WO02052469

(57) **Abstract**

A user carries out charging processing at the time when he/she downloads or outputs a content, and also carried out the charging processing in accordance with the size, resolution, output method, etc. of the content when the charging is carried out.

There are equipped a content server for storing contents, a portal WEB server which a user accesses to use and purchase a content, and a commerce server for managing information on the user and information on content use/purchase of the user, and the content contains sample data of the content, data, etc. of the content, charging information on compensation information of the content, attribute information for control of use of the content, and a unique ID for identifying the content. Charging at the output time is carried out by the processing of setting the above authentication key when the user downloads the content, the processing of transmitting the content to the user terminal in response to use request information of the content indicated and transmitted by the authenticated user, and detecting the attribute information contained in the content at the user terminal, and the processing of decoding the content on the basis of the use request information and outputting the content when the charging processing based on the use request information is authenticated and the content is output, and when the charging processing based on the use request information is not authenticated, the processing of making it impossible to decode and output the content is carried out.

## Description

### TECHNICAL FIELD

The present invention relates to a system for charging a content such as an image file or the like to a user when the user downloads and outputs the content from a content server through a computer network represented by the Internet.

### BACKGROUND ART

Recent advancement of computer networks and communications environment have activated businesses such as commercial activities represented by the Internet. A large number of Web sites for shopping malls, auctions, etc. exist, and various charging method techniques therefor have been developed.

In addition to information equipment such as personal computers, a portable information terminal, a cellular phone, PHS, and information home electronic appliances such as Internet TV sets and game machines have been broadly popular. With respect to the cellular phones, such a type of cellular phones having a browser function appears, and makes it possible to see Web pages of the Internet from each cellular phone terminal.

In such a situation, it has been possible for a user to access various contents through a computer network to see the contents, output the contents by print or the like and achieve the contents by download. Therefore, needs to a technique for the compensation to on-line achievement of contents and the copy right thereof have been quickly enhanced.

In such a situation, there has been developed a system of enabling various contents such as music to be distributed and browsed through an electronic network.

Furthermore, there have been also developed charging method for carrying out the charging caused by distribution and browsing of contents, a compression technique for information to be distributed or the like, an encrypting technique for protecting copy right, privacy information, etc., or an user interface for enabling users to utilize the system with a simple operation.

In such a conventional technique as described above, for example, JP-A-11-224257 titled "ENCAPSULATED OBJECT CONSTRUCTING METHOD, ENCAPSULATED OBJECT SEARCH EXECUTING METHOD AND SYSTEM, AND STORAGE MEDIUM HAVING ENCAPSULATED OBJECT SEARCH-EXECUTING PROGRAM STORED THEREIN" discloses a technique in which a search application is started, a using right of the search application is inquired to a searcher owning the using right to use the search application, the using right is achieved from the searcher, a search method is started with the using right thus achieved as an argument, a search option is generated in multi-stage in the search method, index information is generated in multi-stage by the search method to develop a capsule, and the index information generated is searched as a search target using the capsule-developed search option by a search application.

According to this technique, an encapsulated object constructing method for searching an encapsulated object with precision varied in accordance with each searcher, the encapsulated object being made impossible to be directly referred to by encapsulating a multimedia object, is characterized by providing a capsule with a multimedia object comprising a multimedia content and public index information, plural methods for capsule operation containing at least one search method for searching, and an interface for starting the search method. The encapsulated object construction method provides the following effect.

That is, when a digital content is searched or the like, the content is added with index information, so that an encapsulated content can be developed with precision varied in accordance with the search level and the content can be efficiently searched.

This publication discloses a method of searching a content through a network by using index information, however, it does not disclose a method of carrying out charging processing at the time point when a user downloads or outputs a content and also carrying out the charging processing based on the content size, the content resolution, the content output method, etc. when the charging is carried out, and protecting the content when no charging processing is carried out (that is, in the case of no download, no output, etc.)

Furthermore, JP-A-11-149707 titled "DIGITAL CONTENT DISTRIBUTION SYSTEM" discloses a technique in which when a software user who manages a data recording device transmits a request to a content distribution center for converting content software such as pictures or the like to digital data compressed on the time axis and accumulating the digital data thus compressed, the content distribution center distributes through an information transmitting means a collating code for collating a collation code and the time-axis compressed digital data of the content software corresponding to the request, the data recording device records the digital data when the collation between the collation code received and the identification code thereof succeeds, and a developing device develops the digital data compressed and recorded in the data recording device and outputs the digital data thus developed to an output device.

According to this technique, content software having a large information amount such as pictures, images, music, etc. which are desired by a user can be provided to the user at a low price without interposing media.

This publication discloses a compressing/developing method for a content having a large information amount, however, it also never discloses the technique of carrying out the charging processing at the time point when a user downloads or outputs a content, particularly carrying out the charging processing based on the content size, the content resolution, the content output method, etc. when the charging is carried out, and protecting the content when no charging processing is carried out (that is, neither download nor output is carried out).

Besides, JP-A-10-269289 titled "DIGITAL CONTENT DISTRIBUTION MANAGING METHOD AND DIGITAL CONTENT REPRODUCING METHOD AND APPARATUS" discloses a technique of integrating into one chip a public encrypting/decrypting circuit for decrypting an encrypted content key and encrypting a session key, a communication key holding memory for holding a content key and a session key, a communication key holding memory for holding a key information of a public encipherment system, a point information storage memory for storing point information, a point using information storage memory for storing point using information, a common encrypting/decrypting circuit for decrypting the encrypted digital content, decrypting the encrypted point information and the encrypting the point using information, an expansion circuit for expanding a compressed digital content, and a D/A conversion circuit for D/A-converting the digital content.

According to this technique, there can be provided an economical system which can be readily carried, allows users to enjoy digital contents at any time and at any place, and is sufficiently endurable to operation as the protection to coping or illegal use of the digital contents.

However, this publication also never discloses the technique of carrying out the charging processing at the time point when a user downloads or outputs a content, particularly carrying out the charging processing based on the content size, the content resolution, the content output method, etc. when the charging is carried out, and protecting the content when no charging processing is carried out (that is, neither download nor output is carried out).

Furthermore, JP-A-8-54950 titled "SOFTWARE USE AMOUNT MEASURING DEVICE AND MULTIMEDIA INFORMATION OUTPUT DEVICE" discloses a software use amount measuring processing device that can determine a use amount for which charging is properly carried out even when software is used in a using style other than a normal using style.

According to this invention, when an encrypted image data frame compressed in the MPEG standards is transmitted to an SD circuit, an DES decrypting portion decrypts the frame under the condition that the value of charging counter is equal to 1 or more. The image data frame thus decrypted is expanded in an MPEG expansion circuit one by one. The MPEG expansion circuit outputs a frame expansion completion signal to a frame counter portion every time one frame is expanded. The frame counter portion counts the frame expansion completion signal and outputs the count value to a unit converting portion. The unit converting portion instructs a charge counter register portion to decrement a charge count value every time the count value reaches a predetermined reference value.

This publication discloses the charging processing when encrypted data based on the MPEG standards are decrypted, however, it never discloses any technique that is coefficient to carry out the charging processing based on the content size, the content resolution, the content output method, etc. when the charging processing is carried out and allows a content user to instruct the size, the resolution, the output method, etc. at the time when the charging processing is carried out, also never discloses the data structure of the contents to implement the technique, and never discloses any technique of carrying out charging by using the content data.

Furthermore, JP-A-6-141004 titled "CHARGING SYSTEM" discloses a technique of realizing so-called "Pay Per Program" in which each individual program is watched/listened to with pay with no comprehensive contract.

According to this invention, for a pay-program viewing/listening application made from a pay-program viewing/listening applicant through a public telephone and telegraph line, charging center transmits to a data communication device a viewing/listening permission code for viewing/listening to a pay program, and take a toll. At a reception device receiving the viewing/listening permission code, the pay program is viewed/listened to according to the viewing/listening permission code. One of three modes of fixing/selection/alteration is adopted for scrambling of broadcast programs, one of three modes of time designation/program number designation/temporary number designation is used for the viewing/listening application and one of three modes of decode data/non-public program number/decode data number is used as the viewing/listening permission code.

This publication discloses the charging processing in the program viewing/listening, however, it never discloses any technique that is coefficient to carry out the charging processing based on the content size, the content resolution, the content output method, etc. when the charging processing is carried out and allows a content user to instruct the size, the resolution, the output method, etc. at the time when the charging processing is carried out, also never discloses the data structure of the contents to implement the technique, and never discloses any technique of carrying out charging by using the content data.

Furthermore, as a technique of achieving an authentication key, for example, JP-A-2000-90039 titled "MUSIC DISTRIBUTION METHOD, TRANSMISSION DEVICE AND METHOD, AND REPRODUCING DEVICE AND METHOD" discloses a technique to take the protection of copy right of distributed music data into consideration sufficiently in a system for distributing music data.

According to this invention, a terminal device, identification information, charging processing and digital audio data are provided, and a music server and a client are connected to the Internet. At the client side, a public key and a secrete key are created on the basis of ID inherent to a reproducing device. The public key is transmitted to and registered in the server, and the secret key is held in the device. Distribution of music data is requested from the client to the server. Music data picked up from a music DB are encrypted with the public key registered.

The music data thus encrypted are transmitted to the client and stored in the reproducing device. In the reproducing operation, music data are reproduced while being decrypted with the secret key held in the device. Since the music data stored in the reproducing device are encrypted with the key created on the basis of ID inherent to the device, it cannot be reproduced by other reproducing devices.

This publication discloses a technique for distribution of music data, charging processing and copy right protection, however, the data cannot be reproduced by the other reproducing devices because the charging processing is carried out by using ID inherent to the reproducing device.

Furthermore, JP-A-8-55021 titled "KEY AUTHENTICATION SYSTEM" discloses a technique to enhance the security of sales of software without complicating a storage medium of software and also reduce the time load on users.

According to this invention, a module which can be installed or detachably mounted in hardware is provided for a software storage medium or encrypted software achieved through communications. The module has a function of generating unique information inherent to a user, and a center for managing software is provided with a function of creating permission information based on information inherent to the user. On the basis of the information created in the module and the permission information created in the center, it is judged whether the user is a legal user to which use of software is permitted.

As described above, the technique that it is judged whether the user is a legal user to which use of software is permitted is disclosed, however, this publication never discloses any technique that is coefficient to carry out the charging processing based on the content size, the content resolution, the content output method, etc. and allows a content user to instruct the size, the resolution, the output method, etc. at the time when the charging processing is carried out, also never discloses the data structure of the contents to implement the technique, and never discloses any technique of carrying out charging by using the content data.

Furthermore, as a technique on the charging processing in the print operation, for example JP-A-11-119937 titled "NETWORK PRINTER" discloses a technique to enable a correct charging management in a network printer adapted for a multi-protocol.

According to this invention, a network printer is equipped with a network adapter having a communication protocol portion for receiving multi-protocol communication print data containing charging information and print target data, a communication application portion for adding the communication print data with a printing command and outputting the data, and charging management protocol selecting means for outputting a communication protocol selected by a user and only the communication print data in the communication application when charging management is carried out, a controller for receiving and outputting the communication print data output from the network adapter, a print portion for printing the print target data, and a charging management portion for achieving charging information from the print portion to be able to achieve a charging management.

There has been implemented a network printer that can perform the charging management by using multi-protocol communication print data containing charging information and print target data as described above. However, this publication never discloses any technique that is coefficient to carry out the charging processing based on the content size, the content resolution, the content output method, etc. and allows a content user to instruct the size, the resolution, the output method, etc. at the time when the charging processing is carried out, also never discloses the data structure of the contents to implement the technique, and never discloses any technique of carrying out charging by using the content data.

Therefore, in order to solve the above problems, an object of the present invention is to provide a content charging system for carrying out charging processing at the time point when a user downloads or outputs a content, particularly carrying out the charging processing based on the content size, the content resolution, the content output method. etc. when the charging is carried out, and protecting the content when the charging processing is not carried out (that is, when neither download nor output is carried out).

Furthermore, there is provided a content charging system that is coefficient to carry out the charging processing in accordance with the content size, the content resolution, the content output method, etc. and allows a content user to instruct the size, the resolution, the output method, etc. when the charging processing is carried out.

Still furthermore, there are provided a computer-readable information storage medium in which content data having a content data structure therefor are stored, and a content charging system using the content data.

### DISCLOSURE OF THE INVENTION

In order to solve the above problems, according to the invention of claim 1, there is provided a computer-readable information recording medium having content data stored therein, characterized in that a content such as an image or the like which comprises computer-readable data contains sample data of the content, the data of the main body of the content, charging information on the compensation for use of the content, attribute information on the control of use of the content, and a unique ID for identifying the content.

In order to solve the above problems, according to the invention of claim 2, there is provided a computer-readable information recording medium having content data stored therein, characterized in that a content such as an image or the like which comprises computer-readable data contains sample data of the content, URL information indicating the location of the content main body, charging information on the compensation for use of the content, attribute information on the control of use of the content, and a unique ID for identifying the content.

In order to solve the above problems, according to the invention of claim 3, there is provided a computer-readable information recording medium having content data stored therein, characterized in that a content such as an image or the like which comprises computer-readable data contains sample data of the content, a content location ID for identifying the location of the content main body on a network, charging information on the compensation for use of the content, attribute information on the control of use of the content and a unique ID for identifying the content.

In order to solve the above problems, according to the invention of claim 4, there is provided a computer-readable information recording medium having the content claimed in any one of claims 1 to 3 stored therein, characterized in that the charging information contained in the content contains at least one or a plurality of the size, expiration date, resolution, output method and other conditions of the content.

In order to solve the above object, according to the invention of claim 5, there is provided a computer-readable information recording medium having the content claimed in any one of claims 1 to 4 stored therein, characterized in that the content main body is a content which has been subjected to the processing of compressing a data amount, and when the content main body is used, the content main body is a data format which is decoded by receiving a decode key from the content server and then output.

In order to solve the above problems, according to the invention of claim 6, there is provided a computer-readable information recording medium having the content claimed in any one of claims 1 to 5 stored therein, characterized in that the information recording medium is a content server for storing contents such as images, etc. on a computer network.

In order to solve the above problems, according to the invention of claim 7, there is provided a content charging system, characterized by comprising:, on a computer network,
a content server for storing contents such as images, etc.;
a portal WEB server which a user accesses to use and purchase a content; and
a commerce server for managing information on users and information on content use/purchase of the users, wherein the content contains sample data of the content, the data of the content main body, charging information on the compensation for use of the content, attribute information on the control of use of the content, and a unique ID to identify the content, and wherein charging at the output time is carried out by the processing of displaying the content at a user terminal by a user, the processing of setting an authentication key for charging to the user and the control of use of the content when the user downloads the content, the processing of carrying out authentication of the user accessing the system by using the authentication key, the processing of transmitting the content to the user terminal and detecting attribute information contained in the content at the user terminal in response to use request information of the content indicated and transmitted by the authenticated user, and the processing of decoding the content on the basis of the use request information and outputting the content when the charging processing based on the use request information is authenticated and the content is output, whereas when the charging processing based on the use request information is not authenticated, it is impossible to decode and output the content.

In order to solve the above problems, according to the invention of claim 8, there is provided a content charging system, characterized by comprising:, on a computer network, a content server for storing contents such as images, etc.;
a portal WEB server which a user accesses to use and purchase a content; and
a commerce server for managing information on users and information on content use/purchase of the users, wherein the content contains sample data of the content, URL information for location of the content main body, charging information on the compensation for use of the content, attribute information on the control of use of the content, and a unique ID to identify the content, and wherein charging at the output time is carried out by the processing of displaying the content at a user terminal by a user, the processing of setting an authentication key for charging to the user and the control of use of the content when the user downloads the content, the processing of carrying out authentication of the user accessing the system by using the authentication key, the processing of transmitting the content to the user terminal and detecting attribute information contained in the content at the user terminal in response to use request information of the content indicated and transmitted by the authenticated user, and the processing of decoding the content on the basis of the use request information and outputting the content when the charging processing based on the use request information is authenticated and the content is output, whereas when the charging processing based on the use request information is not authenticated, it is impossible to decode and output the content.

In order to solve the above problems, according to the invention of claim 9, there is provided a content charging system characterized by comprising:, on a computer network,
a content server for storing contents such as images, etc.;
a portal WEB server which a user accesses to use and purchase a content; and
a commerce server for managing information on users and information on content use/purchase of the users, wherein the content contains sample data of the content, content location ID for identifying the location of the content main body on the network, charging information on the compensation for use of the content, attribute information on the control of use of the content, and a unique ID to identify the content, and wherein charging at the output time is carried out by the processing of displaying the content at a user terminal by a user, the processing of setting an authentication key for charging to the user and the control of use of the content when the user downloads the content, the processing of carrying out authentication of the user accessing the system by using the authentication key, the processing of transmitting the content to the user terminal and detecting attribute information contained in the content at the user terminal in response to use request information of the content indicated and transmitted by the authenticated user, and the processing of decoding the content on the basis of the use request information and outputting the content when the charging processing based on the use request information is authenticated and the content is output, whereas when the charging processing based on the use request information is not authenticated, it is impossible to decode and output the content.

In order to solve the above problems, according to the invention of claim 10, there is provided a content charging system in the claims 7 to 9, characterized in that the processing of setting an authentication key for charging to the user and the control of use of the content when the user downloads the content, the processing of carrying out authentication of the user accessing the system by using the authentication key, the processing of transmitting the content to the user terminal and detecting attribute information contained in the content at the user terminal in response to use request information of the content indicated and transmitted by the authenticated user, and the charging processing at the time when the content is received at the user terminal are carried out, and then after the charging processing based on the use request information is authenticated, the user is allowed to select whether the processing of outputting the content is carried out or not.

In order to solve the above problems, according to the invention of claim 11, there is provided a content charging system according to any one of claims 7 to 9, characterized in that the output of the content is an output from a printer connected to the user terminal.

In order to solve the above problems, according to the invention of claim 12, there is provided a content charging system according to any one of claims 7 to 9, characterized in that the output of the content is an output to an external storage device equipped to the user terminal or an external storage device connected to the user terminal.

In order to solve the above problems, according to the invention of claim 13, there is provided a content charging system of any one of claims 7 to 12, characterized in that the user request information indicated and transmitted by the user contains information for indicating one or a plurality of the size, expiration date, resolution, output method and other conditions of the content, and wherein charging at the output time is carried out by the processing of decoding the content on the basis of the use request information and outputting the content when the charging processing based on the use request information containing the conditions indicated by the user is authenticated and the content is output, and when the charging processing based on the use request information is not authenticated, it is impossible to decode and output the content.

in order to solve the above problems, according to the invention of claim 14, there is provided a content charging system according to any one of claims 7 to 13, characterized in that the output of the content can be output by using dedicated software having a function of detecting attribute information contained in the content and a decoding function.

In order to solve the above problems, according to the invention of claim 15, there is provided a content charging system according to any one of claims 7 to 14, characterized in that the authentication key for the charging to the user and the control of use of the content is a USB key or other types of hardware keys.

In order to solve the above problems, according to the invention of claim 16, there is provided a content charging system according to any one of claims 7 to 15, characterized in that the authentication key for the charging to the user and the control of use of the content is achieved through a network when accessing the commerce server to download or output the content.

In order solve the above problems, according to the invention of claim 17, there is provided a content charging system according to any one of claims 7 to 16, characterized in that the system is further equipped with a content output shop terminal that is provided by the system manager side and is connected to the computer network, and the user is allowed to download or output the content by providing the authentication key to the content output shop terminal.

In order to solve the problems, according to the invention of claim 18, there is provided a content registering/charging system, characterized by comprising, on a computer network, a content server for storing a content such as an image or the like, a portal WEB server which a user accesses to register a content, and a commerce server for managing information on the user and information on content use/purchase of the user, wherein content registration and content charging information management are carried out by the processing of setting an authentication key for the charging to the user and control of use of the content when the user registers the content, the processing of carrying out authentication of the user accessing the system with the authentication key, the processing of allowing registration when the registration is permitted on the basis of the authentication, and the processing of setting compensation information for the registration and other conditions by the user.

In order to solve the above problems, according to the invention of claim 19, there is provided a content registering/charging system according to any one of claims 7 to 18, characterized in that content registration and content charging information management are carried out by the processing of setting an authentication key for the charging to the user and control of use of the content when the user registers the content, the processing of carrying out authentication of the user accessing the system with the authentication key, the processing of allowing registration when the registration is permitted on the basis of the authentication, and the processing of setting compensation information for the registration and other conditions by the user.

### BRIEF DESCRIPTION OF THE DRAWINGS

Fig. 1 is a data structure diagram showing an example of the data structure of a content which contains sample data of the content, the data of the content, charging information on compensation information of the content, and a unique ID for identifying the content;
Fig. 2 is a data structure diagram showing an example of the data structure of a content which contains sample data of the content, URL information for the location of the content, charging information on compensation information of the content, and a unique ID for identifying the content;
Fig. 3 is a data structure diagram showing an example of the data structure of a content which contains sample data of the content, content location ID for identifying the location of the content on a network, charging information on compensation information of the content, and a unique ID for identifying the content;
Fig. 4 is a system construction diagram showing an example of the basic system construction of a content charging system of the present invention;
Fig. 5 is a diagram showing information set in an IC chip of USB when a USB key is used an example of an authentication key;
Fig. 6 is a flowchart showing the basic flow of the processing of carrying out the charging processing at the download time;
Fig. 7 is a flowchart showing the flow of the basic processing when the charging at the content output time is carried out on the basis of use request information;
Fig. 8 is a flowchart showing the flow of the basic processing when the charging at the output time of a content is carried out on the basis of use request information;
Fig. 9 is a flowchart showing the flow of the basic processing of a portal WEB server;
Fig. 10 is a flowchart showing the flow of the basic processing of a commerce server;
Fig. 11 is a flowchart showing the flow of the basic processing of a content server;
Fig. 12 is a flowchart showing the flow of the basic processing when a content is registered by using an authentication key;
Fig. 13 is a block diagram showing an example of the data flow in which at a user terminal downloading an image content, attribute information contained in the content is detected and interpreted, and the data are output according to the attribute information on the control of use of the content;
Fig. 14 is a flowchart showing the flow of the basic processing from the authentication processing, the charging processing till the output processing;
Fig. 15 is a flowchart showing the flow of the basic processing from the authentication processing, the charging processing till the output processing;
Fig. 16 is a flowchart showing the details of the flow of the authentication processing; and
Fig. 17 is a flowchart showing the details of the flow of the charging processing.

### BEST MODE FOR CARRYING OUT THE INVENTION

Embodiments according to the present invention will be described hereunder with reference to the drawings.

First, the data structure of contents (images, moving pictures, software, etc.) used in a content charging system according to this invention will be described.

The contents are images or other types of contents comprising computer-readable data, and stored in a storage device such as a data base server for storing contents, an external storage device such as a hard disc, a floppy disk, MO, a memory stick (trademark), smart media (trademark) or other types of information storage media.

The contents used in this invention contain character data, still picture data, moving picture data, animation image data, presentation data, slide data, audio data, game software, application program software and other types of data, and for example, they are constructed in the following file format.

As the file format for still pictures are used JPEG (Joint Photographic Experts Group), PICT (QuickDraw Picture Format), BMP (Bitmap), GIF (Graphics Interchange Format), PNG (Portable Network Graphics), etc.

As the file format for moving pictures are used MPEG-1, MPEG-2, MPEG-4, RV (Real Video), MNG (Multiple-image Network Graphics), AVI (Audio Video Interleaved), etc.

As the file format for sounds are used AIFF (Audio Interchange File Format), WAV (Waveform), AU, RA (Real Audio), the MPEG-1 audio compression system, the MPEG-2 audio compression system, the MPEG-4 audio compression system, etc.

As the file format based on the multiplexed system of moving pictures and sounds are used QUICKTIME, MPEG-1, MPEG-2PS, etc.

PDF (Portable Document Format) is used as an example of the document file format, and Zip, Lzh, etc. are used as the compression file format having the archive function.

Furthermore, various types of file formats other than described above may be used.

It has been normally adopted to append these files with file names, file creating dates, file creators' names, etc. as header information, etc. of the files as well as the data of the contents themselves conventionally.

According to this invention, by adopting the data structure described in the claims 1 to 8, proper charging can be carried out in accordance with the content size, the content resolution, the content output method or other detailed conditions of the content as described later.

### (Embodiment 1 of Content)

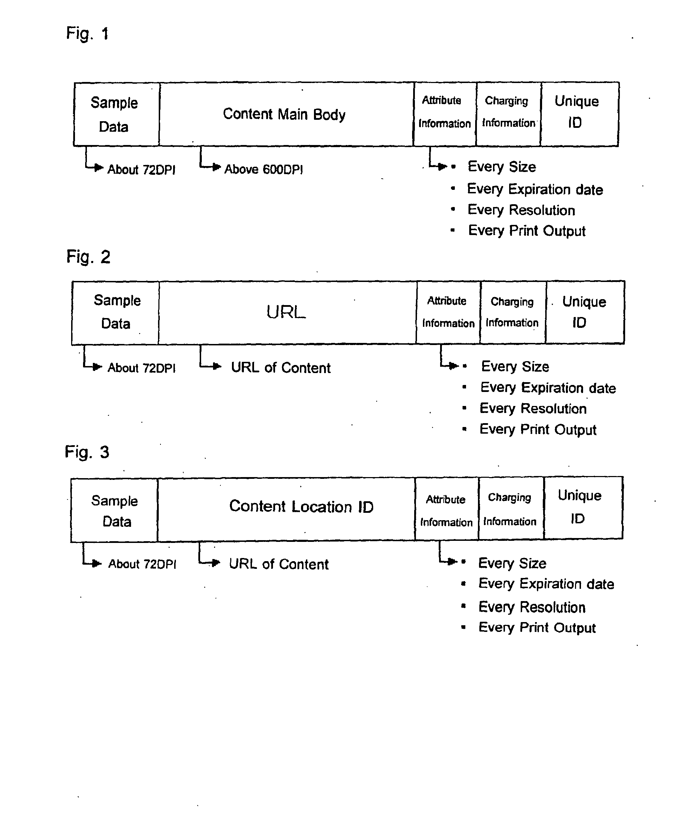

An example of the data structure of a content according to claim 1 is shown in Fig. 1, and it contains the sample data of the content, the data of the content main body, charging information on the compensation for use of the content, attribute information on the control of use of the content, a unique ID for identifying the content.

As a preferable example of the data format, for example, the sample data is a JPEG-format based image having a resolution of 72dpi or more, and the data of the content main body (in this case, image) is an image of the original format having a resolution of 600dpi or more.

In the prior art, when a content such as an image is displayed on WEB, it is displayed in the form of a small (low in resolution) thumbnail, and the thumbnail of an image which a user wishes to view from thumbnails and clicked or the like to display the content main body such as an image or the like. The content images and the thumbnails images thereof are separately preserved as different images.

In the above embodiment, these data are managed as single data. In addition, a unique ID with which a content concerned can be uniquely identified from many contents is allocated, and further the charge for use of a content, that is, the above-described charging information which is based on a way of using a content, such as downloading or printing the content, an output service, the size or resolution of the content, etc. is managed as one-record data.

At least a field of the sample data, the data of the content main data, the charging information, the attribute information and the unique ID is provided in one record, and codes indicating the locations of the sample data, etc. when these data are read out are normally provided, whereby the various problems described above can be solved by this invention.

The data structures of contents in the other claims of the present invention are the same as described above.

### (Embodiment 2 of Content)

An example of the data structure of the content according to claim 2 is shown in Fig. 2, and it contains the sample data of a content, URL information indicating the location of the content main body, charging information on the compensation for use of the content, attribute information on the control of use of the content and a unique ID for identifying the content.

As a preferable example of the data format, for example, the sample data is a JPEG-format based image having a resolution of 72dpi or more, and the data of the content main body (in this case an image) is an image located at a place indicated by the URL.

### (Embodiment 3 of Content)

An example of the data structure of the content according to claim 3 is shown in Fig. 3, and it contains the sample data of a content, an content location ID for identifying the location of the content main body on a network, charging information on the compensation for use of the content, attribute information on the control of use of the content and a unique ID for identifying the content.

As a preferable example of the data format, for example, the sample data is a JPEG-format based image having a resolution of 72dpi or more, and the data of the content main body (in this case an image) is an image located at a place indicated by the content location ID. The data of the content location IDs are managed by a data base in a storage device such as a data base server, and ID allocated to each content and data specifying URL and LAN or the location on a network at which the content exists are stored while being associated with each other. The data base is searched by using the content location ID as a key to specify the location of the content main body.

In any content of the claims 1 to 3, the charging information owned by the content may contain one or a plurality of the following data: the size, expiration date, resolution, output method, and other conditions of the content.

The attribute information on the control of use of the content contains attribute information to limit content users to members or the like, attribute information to control flow or use of the content or the like.

The contents contain various styles of data such as image data, moving picture data, animation images, audio data, character data, computer game software, computer programs and combinations thereof.

### (Embodiment 4 of Content)

Particularly, the invention according to claim 5 is characterized in that the content is as follows.

That is, in a computer-readable information storage medium having the content of any one of claims 1 to 4, stored therein characterized in that the content main body is a content which has been processed to compress the data amount thereof, and it has such a data format that when the content main body is decoded, it is passed through the charging processing as the compensation for use of the content, a decode key is received from the content server and the content is decoded and output.

### (Embodiment 5 of Content)

The invention according to claim 6 is characterized in that the content is as follows.

That is, the information recording medium is a content server for storing a content such as an image on the computer network.

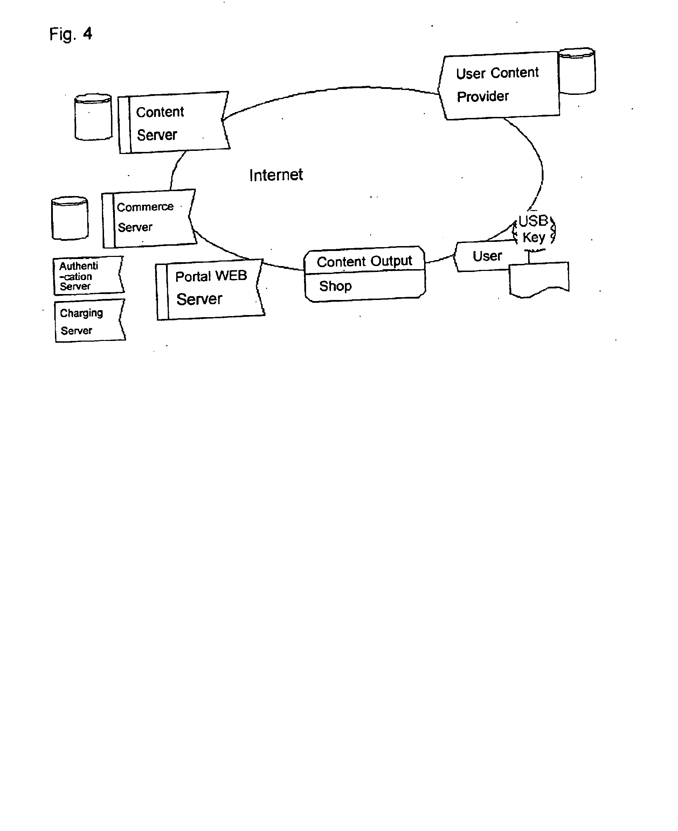

Fig. 4 is a system construction diagram showing an example of the basic system construction of a content charging system according to this invention.

The content server is a storage device for storing various contents as described above in the system of this invention in which the charging at the download time and the charging at the use time are provided for distribution of contents.

The invention of the claims 7 or after relates to a system for charging for contents, and the details thereof will be described hereunder.

Fig. 4 is a system construction diagram showing the basic construction of the system according to this invention.

The basic hardware construction of the system of this invention comprises, on a computer network, a content server for storing contents such as images, etc., a portal WEB server which users access to use and purchase the contents, and a commerce server for managing information on the users and information on the use and purchase of the contents by the users. Furthermore, as occasion demands, the system may be equipped with a large-scale data base server, an image accumulating/distributing server, a WEB server, a mail server, an application server, a search server, an authentication server, etc., and the respective servers are preferably multiplexed to keep security if necessary.

The above construction is a preferable example, however, the construction of each server may be designed to be different insofar as the function of each server described in detail later can be implemented because the location of the server can be specified by URL or the like.

The respective servers such as the content server, the portal WEB server, the commerce server, etc. may be located at the physically same place. However, the locations of the servers can be specified by URL or the like even when they exist at physically or spatially remote places, and thus the system of this invention can be implemented in such a situation.

Furthermore, various constructions may be adopted insofar as the same functions as the servers can be implemented like both of the content server and the commerce server are functioned by a same single server, for example.

The content charging system of this invention is equipped with a content server for storing contents such as images on a computer network.

The functions of the content server contain the following processing.
(1)The content server accepts a processing request from the commerce server, and transmits a processing result to the commerce server.
(2) The content server carries out registration, renewal and deletion of contents.
(3) The content server encodes contents.

It is a preferable embodiment that the commerce server and the content server are connected to each other by a high-security system.

Next, the content charging system of this invention is equipped with the portal WEB server which users access to use and purchase contents.

The functions of the portal WEB server contain the following processing.
(1) The portal WEB server relays an image distribution service request from a user (browser) to the commerce server.
(2) The portable WEB server relays a response from the commerce server to the user.
(3) The portal WEB server and the commerce server are connected to each other by a high-security system.

The content charging system of this invention is equipped with the commerce server for managing the information on the users and the information on the use and purchase of the contents by the users.

The functions of the commerce server contain the following processing.
(1) The commerce server accepts a processing request from the portal WEB server and transmits a processing result to the portal WEB server.
(2) The commerce server carries out authentication of users (authentication server function).
(3) The commerce server carries out registration, renewal and deletion of users.
(4) The commerce server manages the charging information of the image distribution service of the users (for example, user ID, use date, image number, image size, resolution, expiration date, output/using method such as print output or the like) (charging server).
(5) The commerce server manages registration information of contents.
(6) The commerce server manages image distribution service logs of users.
(7) The commerce server and the content server are connected to each other by a high-security system.

### (Embodiment 1 of Charging system)

In the invention according to claim 7, the content contains the sample data of the content, the data of the content main body, charging information on the compensation for use of the content, attribute information on the control of use of the content, and a unique ID for identifying the content. That is, the content is the content according to claim 1.

In this embodiment, on a computer network are equipped a content server for storing contents such as images, etc., a portal WEB server which users access to use and purchase the contents, and a commerce server for managing information on the users and information on use and purchase of the contents by the users, and the content contains the sample data of the content, the data of the content main body, charging information on the compensation for use of the content, attribute information on the control of use of the content, and a unique ID for identifying the content.

The charging at the output time is carried out by the processing of displaying the content at a user terminal by a user, the processing of setting the charging to the user and an authentication key for controlling use of a content when the user downloads the content, the processing of authenticating the user accessing the system by using the authentication key, the processing of transmitting the content to the user terminal in response to use request information of the content indicated and transmitted by the authenticated user, and detecting the attribute information contained in the content at the user terminal, and the processing of decoding the content on the basis of the use request information and outputting the content when the charging processing based on the use request information is authenticated and the content is output.

When the charging processing based on the use request information is not authenticated, it is impossible to decode and output the content.

The flow of the basic processing of this invention will be described hereunder.

The flow of the processing described hereunder is an example, and this invention is not limited to this example.

First, the user uses the authentication key upon utilizing downloading or outputting a content by using the system of this invention, and thus the user is required to prepare an authentication key for hardware (for example, USB key or the like) in advance or when the user uses the system.

ID for identifying the user is set in the authentication key.

Furthermore, the attribute information for limiting content-available users and controlling distribution or use of contents is set.

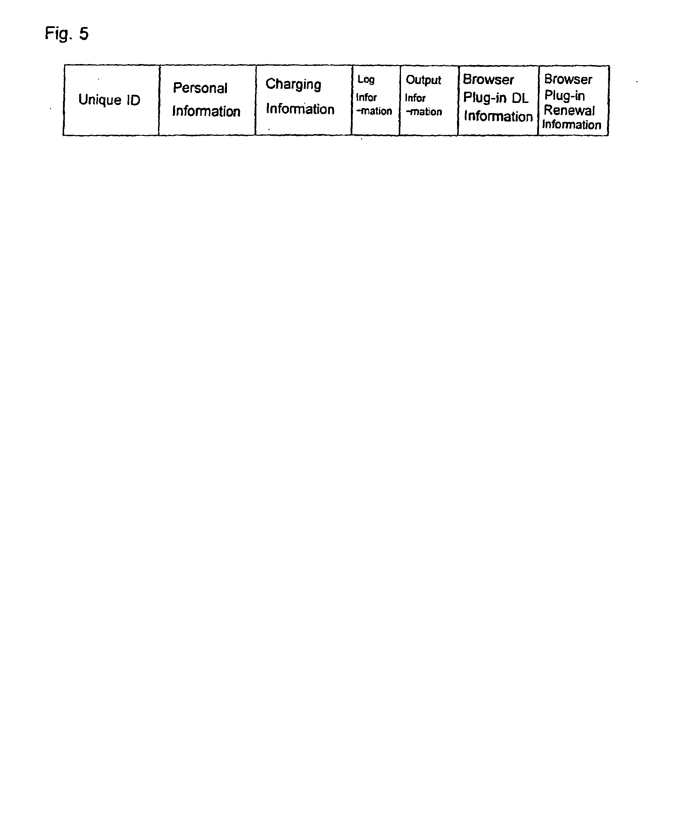

Fig. 5 is a diagram showing information to be set in an IC chip of USB when a USB key is used as an example of the authentication key.

In the IC chip are set a unique ID, personal information, charging information, attribute information, log information, output information, browser plug-in download information, browser plug-in renewal information , etc.

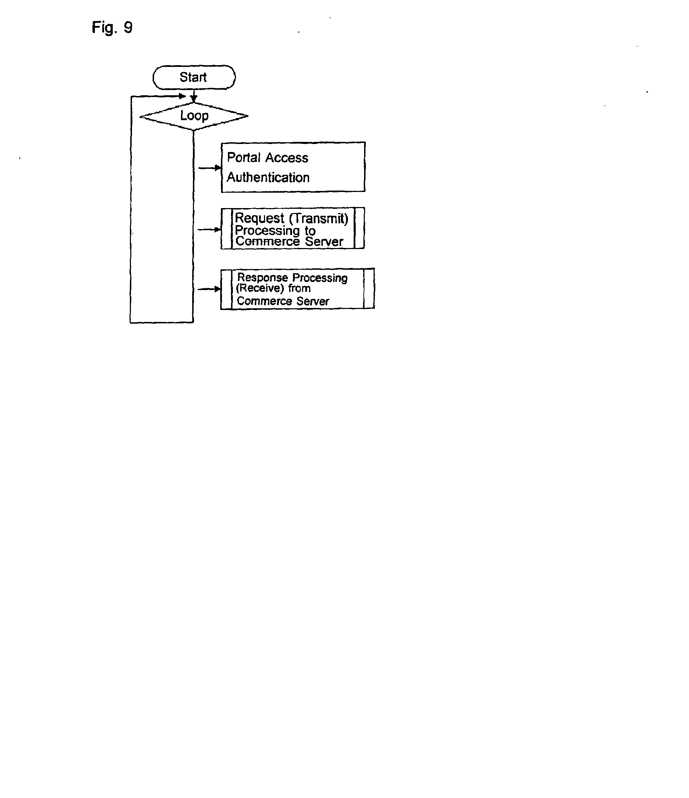

Fig. 9 is a flowchart showing the flow of the basic processing of the portal WEB server.

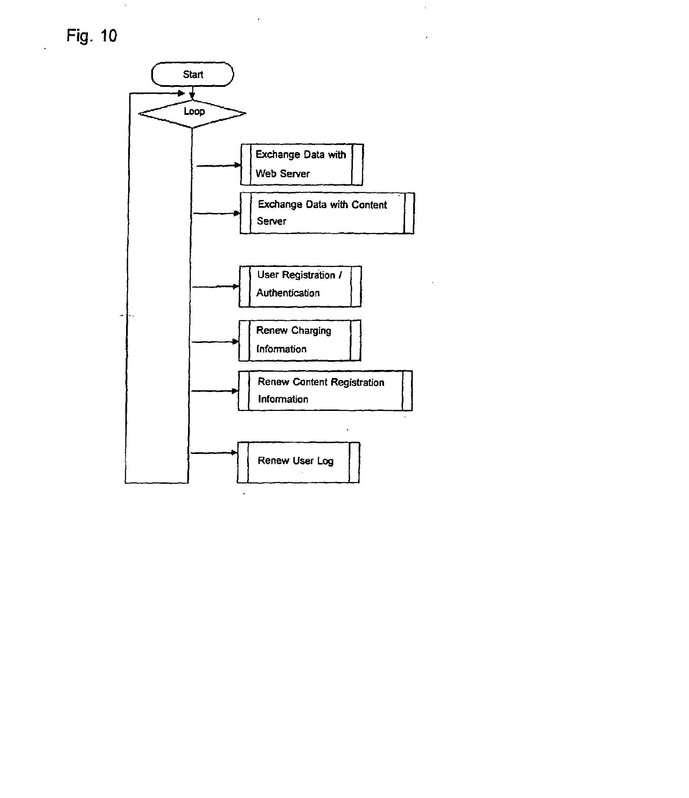

Fig. 10 is a flowchart showing the flow of the basic processing of the commerce server.

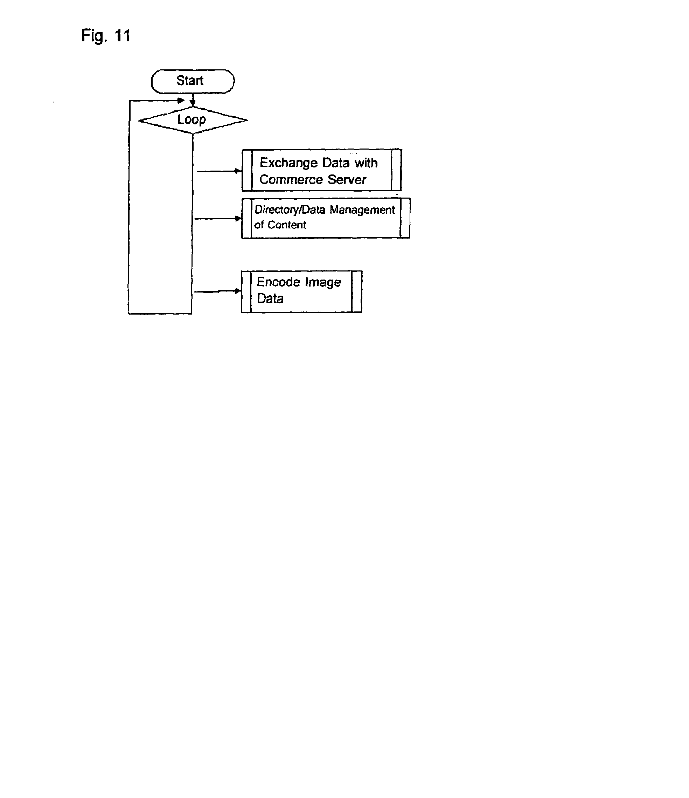

Fig. 11 is a flowchart showing the flow of the basic processing of the content server.

The portal WEB serve normally provides services such as downloading of contents, outputting of contents, etc., and manages a WEB site (portal site) for charging for use of contents, etc. A user who wishes to use a content accesses a portal WEB server by inputting URL in a browser equipped to a user terminal connected to a network.

Here, the user terminal contains a computer terminal such as a personal computer, a portable information terminal such as a cellular phone having a browsing function, a dedicated terminal, information home electric appliances such as WEB-TV or game machines, and other types of terminals.

At a portal site, users accepting content use services are preferably registered as membership by registering their member's information. The member's information contains address, name, telephone number, electronic mail address, charging (payment) method, and other information.

On the basis of the registration and management of the member's information as described above, an authentication key for authentication/content charging described later is issued.

In the manner of issuing an authentication on on-line, it is preferable that a user inputs and transmits his/her member's information at the portal site, the information thus transmitted is stored in the commerce server to be examined or the like, and then an authentication key is issued.

The member's information is managed in the commerce server.

Registration, renewal and deletion of users are carried out at the commerce server.

Or when a content output shop terminal provided by a system manager side is equipped so as to be connected to the computer network like the invention according to claim 17, the authentication key may be issued at the content output shop by inputting/transmitting information from the content output shop terminal.

When a user uses/purchases a content such as an image or the like from a portal site, a method of carrying out the charging at the download time or a method of carrying out the charging at the use time may be used. In the invention according to claim 10, the charging is carried out at the download time.

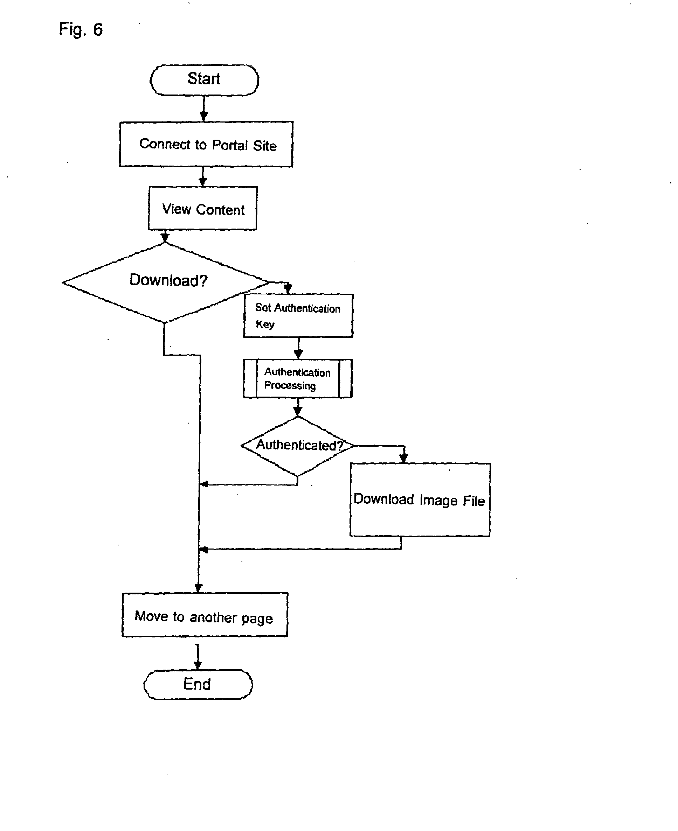

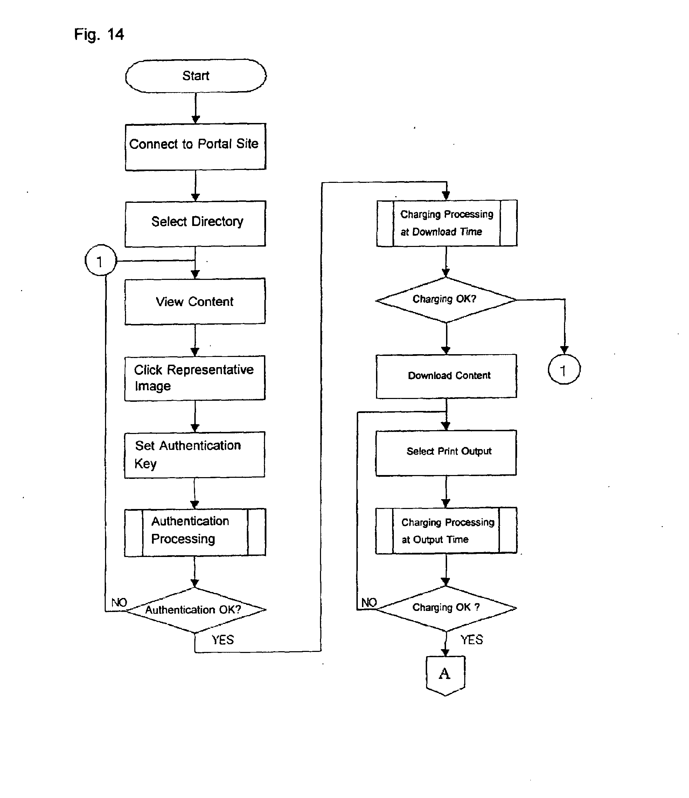

Fig. 6 is a flowchart showing the basic flow of the processing of carrying out the charging at the download time. Fig. 14 also shows the flow of the processing when the charging is carried out at the download time.

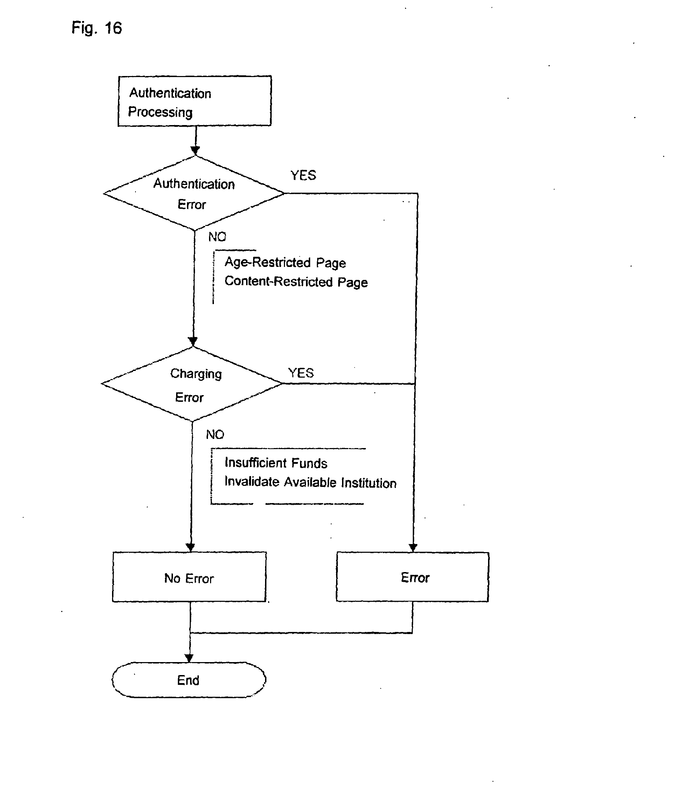

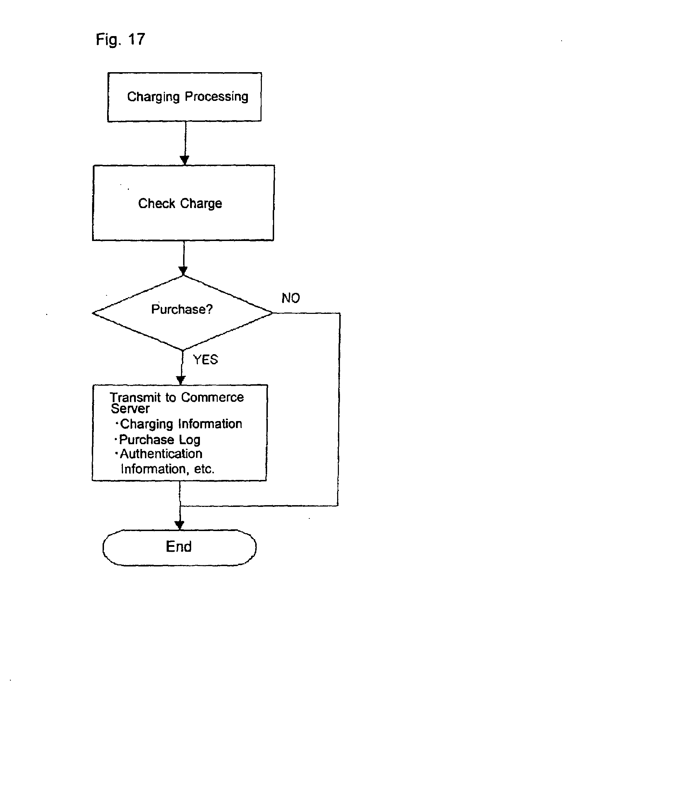

Figs. 16 and 17 show examples of the detailed flow of the authentication processing and the charging processing, respectively.

As described above, a user who wishes to use a content connects to a portal site by inputting URL in a browser equipped to the user terminal connected to the network.

Here, the user views to select a his/her desired content from various genres and content formats, however, a user at a portal site is allowed to view only sample images for images of any format.

That is, only the sample data in the data contained in the content described above is displayed in the WEWB site.

The contents are stored in the content server, and the commerce server accepts a processing request from the portal WEB server by user's action such as selection of a content or the like.

The content server accepts the processing request from the commerce server, and transmits a processing result to the commerce server. The commerce server transmits the processing result to the WEB server to display the sample data or the like.

That is, by referring to content registration information equipped in the commerce server on the basis of the unique ID having a selected content or the like, the corresponding content stored in the content server is extracted, and the sample data contained in the content concerned is read out. The processing result is transmitted to the commerce server, and the commerce server transmits the processing result to the WEB server to display the sample data or the like.

In the case of audio data, sample sounds are output. The commerce server and the content server are connected to each other by a high-security system.

The content registration, renewal and deletion are carried out in the content server.

The charging information based on each content (the rule for charging) is preset for a content such as an image every size, every resolution, every expiration date or the like at the commerce server, and the commerce server (charging server) manages the information every user and every content ID.

The charging information based on each content is charging point based on classification/attribute/using method or the like. That is, it is charging point based on each content, each content size, each content output size (A0, A1, A2, A3, A4, ..), each resolution, each expiration date, each print output destination, each member, each license contract content, each metered rate or other classification/attribute/using method.

The content registration information is managed in the commerce server. The content registration information is information for associating a content location, a content genre, a data format, a content creator or owner, a payment destination of charged money and other information with content ID, and stored in the commerce server.

Subsequently, the user selects a download-desired content from the sample data of contents which are viewed or the like by the user, determines whether the content should be downloaded or not and transmits the determination information, and the information thus transmitted is received by the portal WEB server.

When the content is not downloaded, the user carries out the processing of moving to another WEB page or returning to a preceding page.

When the content is downloaded, the following processing is carried out.

The commerce server accepts the processing request from the portal WEB server and carries out the authentication of the user (authentication server function).

It is preferable that the authentication of the charging to the user is carried out by an authentication key based on hardware (for example, USB key or the like). That is, information to be authenticated is stored in hardware such as a USB key or the like, and the key or the like is set into the user terminal when the charging processing is carried out.

The authentication key for the charging to the user or the control of content use is set when the user downloads the content.

ID for identifying the user is set in the authentication key (USB key or the like). Furthermore, the amount of money used by the user when the user carries out the charging processing or the frequency of available points similar to the money is set in the authentication key.

In addition, the authentication key may be further equipped with a password, a one-time password allowing only once use, and information for user authentication based on a system using a public key and a secret key or various other authentication systems.

When using the content charging system, the user uses a point to calculate the amount of money for charging, but as described above, the point is set for each content such as an image or the like in accordance with the content size, the content resolution, the content expiration or the like.

The user ID stored in the authentication key and the information on the amount of money or the frequency of available points similar to the amount of money which is stored in association with the user ID can be managed on a user basis by the commerce server (charging server), and in this case, the user authentication and the management of the charging information for each user can be performed by verification of the both.

Subsequently, the commerce server (authentication server) carries out the authentication, and as a result of the authentication it is judged whether download or use of the content is permitted or not. The commerce server returns the processing result to the portal WEB server, and transmits to the user terminal an HTML file or the like which displays the result indicating authentication or non-authentication. That is, the authentication result is displayed on the screen of the user terminal.

When permission is given on the basis of the authentication, a download instruction is transmitted from the commerce server to the content server with the user terminal being indicated as a transmission (download) destination, and the processing goes to the download processing. However, there may be further added the processing of promoting the user to further check whether the download should be carried out or not before going to the download processing.

When the foregoing processing is cleared, the download processing is carried out.

That is, the download processing is executed by the processing of referring to the content registration information owned by the commerce server on the basis of the unique ID contained in the content thus selected or the like to extract the corresponding content stored to the content server, reading out the content data in the corresponding content and transmitting (downloading) the content data to the user terminal, and also by the processing of reading out the corresponding charging information in the corresponding content, transmitting the download (charging) processing result to the commerce server, renewing the information of the charging point owned by the authentication key and transmitting the processing result from the commerce server to the content server when the charging processing is carried out at the download time as described in the claim 10.

It is preferable that the available service log such as download, etc. by the user is managed in the commerce server.

Here, like the invention according to claim 10, it is possible that the charging processing is temporarily carried out, and then the user selects whether the content is decoded and output or not. In this case, if the content is not decoded and output, the processing is completed at that time. If the content is output, the processing goes to the charging processing at the output time described later.

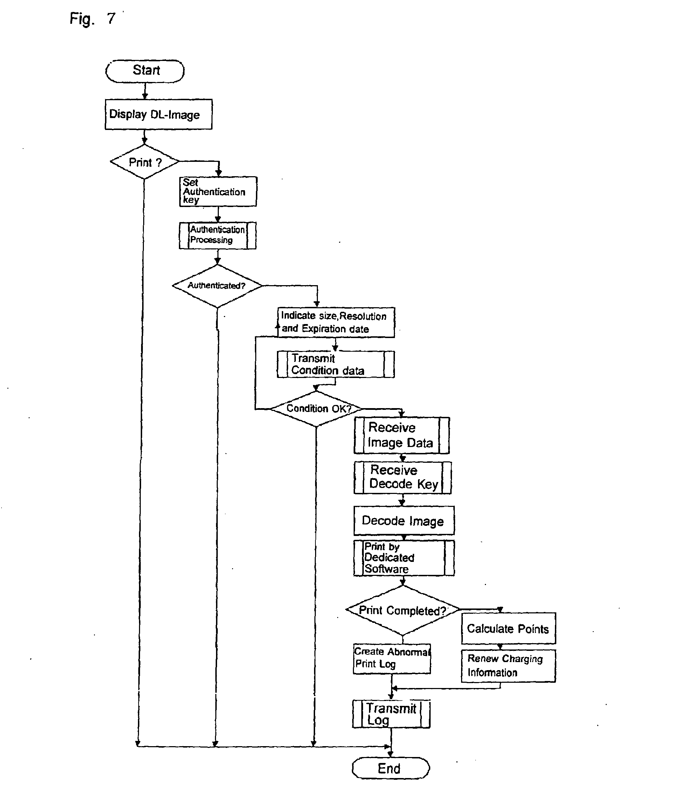

Fig. 7 is a flowchart showing the flow of the basic processing when the decode key is received and the charging at the download time is carried out on the content. Fig. 14 also shows the flow of the processing when the charging at the download time is carried out.

Fig. 16 and 17 show examples of the detailed flows of the authentication processing and the charging processing, respectively.

In the flowchart of Fig. 7, as the decode key reception timing, the use request information containing the content size, the content resolution and other conditions is transmitted from the user terminal, the data are transmitted from the portal WEB server to the commerce server to make a processing request, and according to the use request information having the above condition a content such as image data or the like is downloaded from the content server to receive the content at the user terminal.

In the invention of the claim 10, the charging processing at the download time is carried out as described above, and when the content is output, the processing goes to the charging processing at the output time described later, whereby the downloaded content can be viewed/listened to or output.

It is a normal style that the contents which the user can view before the user passes through the download/charging processing of the content are the above sample contents.

Here, at the download stage, the user achieves a content (that is, not the sample data, but the content main body) by downloading the content, however, the content main body is protected so that it is unavailable because the content stored in the content server is encoded according to a predetermined data format.

The content thus downloaded contains the charging information on the compensation for use of the content and the attribute information on control of the use of the content.

The content used in this invention contains the attribute information for controlling the use of the content.

There has been hitherto known a technique achieving correctly the charging management in which charging information and print target data are contained in communication print data received in order to perform proper charging management in a network printer adapted for the multi-protocol, for example.

There has been implemented such a network printer that the charging management can be performed by using the multi-protocol communication print data containing the charging information and the print target data as described above. However, in this invention, the content data contains the charging information for carrying out the charging processing in accordance with the content size, the content resolution, the content output method, etc., and the attribute information for restricting users like membership/non-membership or the like, and controlling distribution/use of contents such as restriction of the content output method/frequency or the like.

Here, the user is allowed to output a content (that is, not the sample data, but the content main body) by decoding the content at the output time such as printing, that is, at the stage achieving the charge processing.

As described above, since the contents stored in the content server are encoded according to the predetermined data format, the content server carries out the download processing and transmits the content to the user terminal in response to the use request information of the content indicated and transmitted by the authenticated user, and the attribute information contained in the content is detected at the user terminal.

When the charging processing based on the use request information is authenticated and the content is output, the charging at the output time is carried out in connection with the processing of decoding the content on the basis of the use request information and outputting the content thus decoded.

When the charging processing based on the use request information is not authenticated, it is made impossible to decode and output the content.

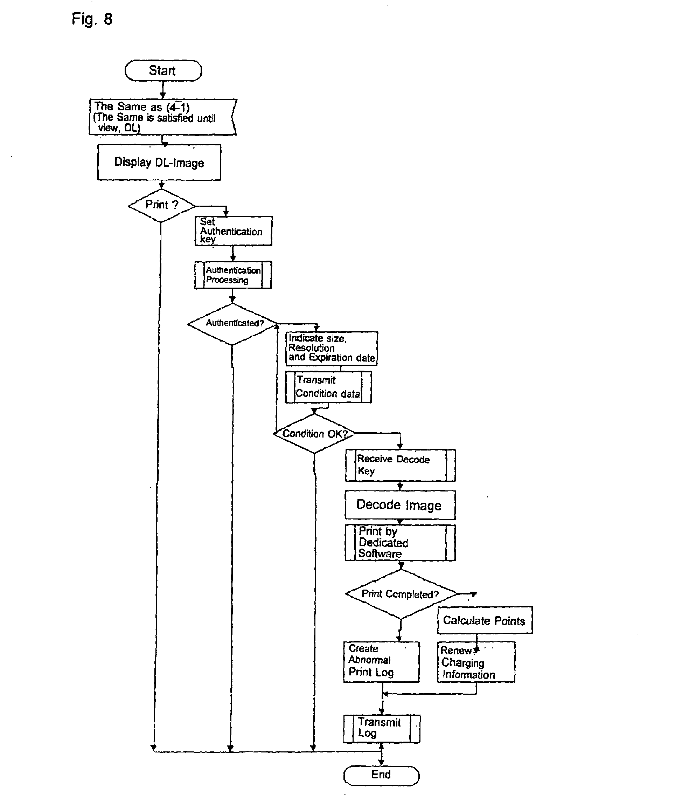

Fig. 8 is a flowchart showing the flow of the basic processing when the charging at the output time is carried out in connection with the processing of decoding and outputting the content on the basis of the use request information.

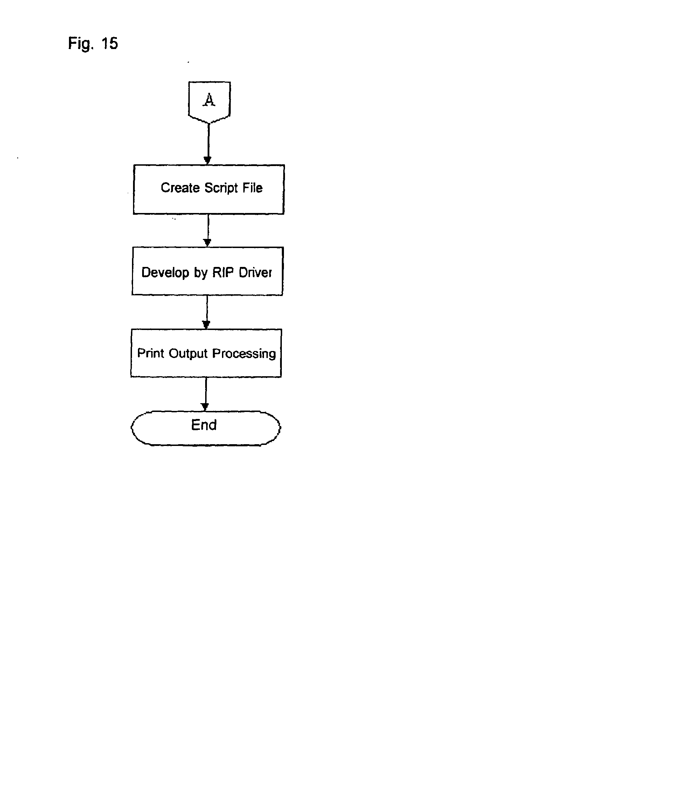

Figs. 14 and 15 are flowcharts showing the flow of the basic processing from the authentication processing, the charging processing to the output processing, Fig. 16 is a detailed flowchart of the authentication processing, and Fig. 17 is a detailed flowchart showing the charging processing.

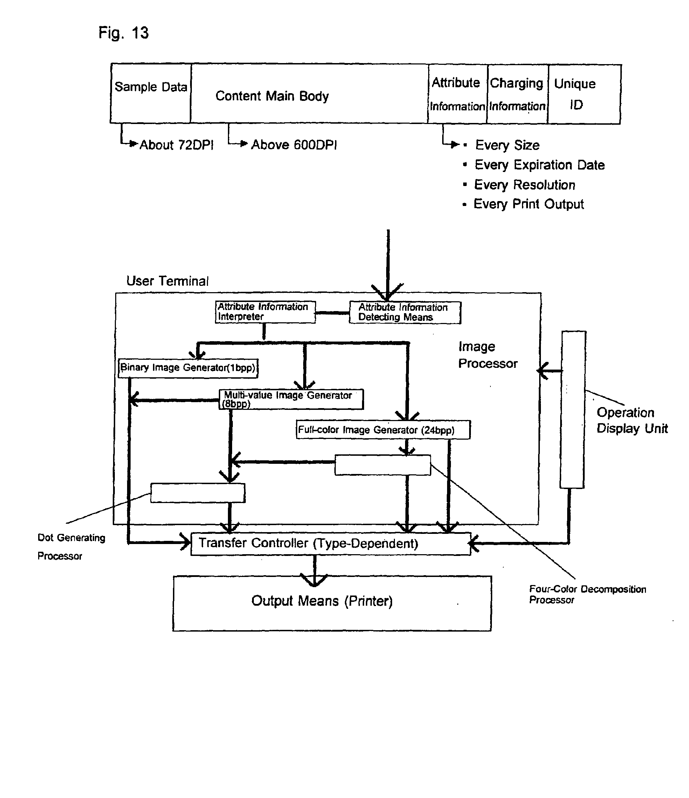

Fig. 13 is a block diagram showing an example of the data flow along which the user terminal downloading an image content detects the attribute information contained in the content to interpret the attribute information, decodes the content according to the attribute information on the control of the content use and then outputs the content thus decoded.

As described above, the available service log of the download of the user, etc. is preferably managed by the commerce server, and the available service log is transmitted from the user terminal to the system side of this invention. Particularly, this is necessary to complete the charging processing under the condition that the output processing such as print is normally completed.

### (Embodiment 2 of Charging System)

Next, the content charging system according to the claim 8 will be described.

According to this embodiment, on a computer network are equipped a content server for storing contents such as images, etc., a portal WEB server to which users access to use or purchase the contents, and a commerce server for managing information on the users and information on content use/purchase of the users. The content contains the sample data of the content, URL information indicating the location of the content main body, charging information on the compensation for use of the content, attribute information on control of use of the content, and a unique ID for identifying the content.

The charging at the output time is carried out by the processing of displaying the content at the user terminal by the user, the processing of setting an authentication key for the charging to the user and the control of the content use when the user downloads the content, the processing of authenticating the user accessing the system by using the authentication key, the processing of transmitting the content to the user terminal in response to content use request information indicated and transmitted by the authenticated user and detecting the attribute information contained in the content at the user terminal and decodes and output the content on the basis of the use request information when the charging processing based on the use request information is authenticated and the content is output.

When the charging processing based on the use request information is not authenticated, it is made impossible to decode and output the content.

Fig. 8 is a flowchart showing the flow of the basic processing when the decode key is received and the content charging based on the output time is carried out.

In this embodiment, the content contains the sample data of the content, the URL information indicating the location of the content main body, charging information on the compensation for use of the content, attribute information on control of the content use, and a unique ID for identifying the content, that is, the content according to claim 2 is used. The basic flow of the processing is common to that of the embodiment 2 of the charging system.

Furthermore, in this embodiment, the content is stored in the content server in association with the unique ID of the content registration information managed by the commerce server. However, since the URL information indicating the location of the content main body is contained in place of the content data contained in the content, the data of the content main body must be stored at the position indicated by the URL separately from the content.

The user can view/listen to or download the content before the reception processing of the decode key. However, since the charging processing has not yet been completed at this time point, the data of the content main body are located at the position indicated by the URL so that only the sample data of the content can be viewed/listened to or output, and the use/output of the content is normally kept to be restricted on the basis of the attribute information for the control of content use which is contained in the content.

Here, when an output such as print or the like is carried out, that is, at the stage that the charging processing is carried out, the user can output the content by decoding the content (that is, not the sample data, but the content main body).

As described above, since the content stored in the content server is encoded according to the predetermined data format, the content server carries out the download processing and then transmits the content to the user terminal in response to the use request information indicated and transmitted by the authenticated user. The user terminal carries out the processing of detecting the attribute information contained in the content.

When the charging processing based on the use request information is authenticated and the content is output, the charging at the output time is carried out in connection with the processing of decoding and outputting the content on the basis of the use request information.

When the charging processing based on the use request information is not authenticated, it is made impossible to decode and output the content.

Fig. 8 is a flowchart showing the flow of the basic processing when the charging at the output time is carried out in connection with the processing of decoding the content on the basis of the use request information and outputting the content.

Fig. 13 is a block diagram showing an example of the data flow along which the user terminal downloading an image content detects and interprets the attribute information contained in the content, and decodes and output the content according to the attribute information on the control of the content use.

As described above, it is preferable that the user's available service log of the download, etc. is managed at the commerce server, and the available service log is transmitted from the user terminal to the system side of this invention. Particularly, this is necessary to complete the charging processing under the condition that the output processing such as print is normally carried out.

In the case of this embodiment, the URL information indicating the location of the content main body, so that the data of the content main body is stored at the place indicated by the URL separately from the content.

Therefore, the content contains particularly the following embodiment.

HTML files, XML files, CHTML files, etc. which are files displayed on WEB (in this case, particularly containing a closed network such as intranet) are the contents themselves, and each of these files contains the sample data of the content, the URL information indicating the location of the content main body, the charging information on the compensation information of the contents, the attribute information on the control of the content use, a unique ID for identifying the content.

The content main body exists at the place indicated by URL.

At a tag in the source of a file which defines uniquely, the charging information on the compensation information for the content, the attribute information on the control of the content use, and the unique ID for identifying the content are contained in the file. The unique tag definition is particularly effective to carry out the content management for files using XML or the like in cooperation with the data base in which the content main body is stored.

When contents are used, information is transmitted/received between the user terminal and the system of this invention, and at the user terminal side charging information and attribute information defined by tags are detected, and the contents are output/used in such a manner that use such as output is allowed by carrying out the charging processing.

### (Embodiment 3 of Charging System)

Next, the content charging system according to claim 9 will be described.

In this embodiment, on a computer network are equipped a content server for storing contents such as images, etc., a portal WEB server to which users access to use/purchase the contents, and a commerce server for managing information on the users and information on user's use/purchase of the contents. The content contains the sample data of the content, a content location ID for identifying the location of the content main body on the network, charging information on the compensation for use of the content, attribute information on control of the content use, and a unique ID for identifying the content.

The charging at the output time is carried out by the processing of displaying the content at the user terminal by the user, the processing of setting the charging to the user and the authentication key for control the content use when the user downloads the content, the processing of carrying out the authentication of the user accessing the system by using the authentication key, the processing of transmitting the content to the user terminal in response to the use request information of the content indicated and transmitted by the authenticated user, and detecting the attribute information contained in the content at the user terminal, and the processing of decoding the content on the basis of the use request information and outputting the content thus decoded when the charging processing based on the use request information is authenticated and the content is output.

When the charging processing based on the use request information is not authenticated, it is made impossible to decode and output the content.

Fig. 8 is a flowchart showing the flow of the basic processing when the decode key is received and the charging at the output time of the content is carried out.

In this embodiment, the content contains the sample data of the content, a content location ID for identifying the location of the content on the network, charging information on the compensation information of the content, attribute information on control of use of the content, and a unique ID for identifying the content, that is, the content according to the claim 3 is used. The flow of the basic processing is common to the embodiments 2 and 3 of the charging system.

In this embodiment, the content is stored in the content server in association with the unique ID of the content registration information managed by the commerce server. However, the content location ID for identifying the location of the content main body on the network is contained in the content in place of the content data contained in the content, so that the data of the content main body must be stored at the place indicated by the content location ID separately from the content.

The user can view/listen to the content before the reception processing of the decode key or can download. However, the charging processing has not yet been completed at this time point, so that the data of the content main body is located at the place indicated by the content location ID so that the user is allowed to view/listen to or output only the sample data of the content, and the use/output of the content is kept to be restricted on the basis of the attribute information for the control of the content use which is contained in the content.

Here, at the stage that an output such as print is carried out, that is, the charging processing is carried out, the user is allowed to output the content by decoding the content (that is, not the sample data, but the content main body).

As described above, since the content stored in the content server is encoded according to the predetermined data format, the content server carries out the download processing, and then transmits the content to the user terminal in response to the use request information of the content indicated and transmitted by the authenticated user. The attribute information contained in the content is detected at the user terminal.

When the charging processing based on the use request information is authenticated and the content is output, the charging at the output time is carried out in connection with the processing of decoding the content on the basis of the use request information and outputting the content.

When the charging processing based on the use request information is not authenticated, it is made impossible to decode and output the content.

Fig. 8 is a flowchart showing the flow of the basic processing when the charging at the output time is carried out in connection with the processing of decoding the content on the basis of the use request information and outputting the content.

Fig. 13 is a block diagram showing an example of the data flow along which the user terminal downloading an image content detects and interprets the attribute information contained in the content, decodes the content according to the attribute information on the control of the content use, and then outputting the content thus decoded.

As described above, the user's available service log of download, etc. is preferably managed in the commerce server, and the available service log is transmitted from the user terminal to the system side of this invention. Particularly, it is necessary to complete the charging processing under the condition that the output processing such as print has been normally carried out.

Furthermore, in this embodiment, the content location ID for identifying the location of the content main body on the network is contained, so that the data of the content main body are stored at the place located by the content identification ID separately from the content.

Therefore, the content contains particularly the following embodiment.

HTML files, XML files, CHTML files, etc. which are files displayed on WEB (in this case, particularly containing a closed network such as intranet) are the contents themselves, and each of these files contains the sample data of the content, the URL information indicating the location of the content main body, the charging information on the compensation information of the contents, the attribute information on the control of the content use, a unique ID for identifying the content.

The content main body exists at the place indicated by the content identification ID.

At a tag in the source of a file which defines uniquely, the charging information on the compensation information for the content, the attribute information on the control of the content use, and the unique ID for identifying the content are contained in the file. The unique tag definition is particularly effective to carry out the content management for files using XML or the like in cooperation with the data base in which the content main body is stored.

When contents are used, information is transmitted/received between the user terminal and the system of this invention, and at the user terminal side charging information and attribute information defined by tags are detected, and the contents are output/used in such a manner that use such as output is allowed by carrying out the charging processing.

In any case, as the content output method may be contained an output from a printer connected to the user terminal as in the case of the invention of claim 11, or an output to an external storage device equipped to the user terminal or connected to the user terminal as in the case of the invention of the claim 12, or other output methods.

### (Embodiment4 of Charging System)

Next, the invention of the claim 14 is characterized in that the content can be output by using dedicated software having the function of detecting attribute information contained in the content and the decode function in claims 7 to 13.

An output such as print of a content such as an image achieved by the user can be performed by only dedicated software.

### (Embodiment 5 of Charging System)

Next, the invention according to claim 17 is characterized in that the system according to the invention of claim 7 to 16 is further equipped with a content output shop terminal provided by the system manager side while connected to the computer network, and the user equips the authentication key to the content output shop terminal, so that the content can be downloaded or output.

Since the authentication key comprising hardware such as a USB key is used, the user can perform the output such as print even at the content output shop if the authentication key is appended (or purchased) . The flow of the processing until the output is common among the each embodiments described above.

### (Embodiment 6 of Charging System)

Next, the invention according to claim 18 is characterized in that the user can register a content serving as charging target by the following construction.

That is, on a computer network are equipped a content server for storing contents such as images, a portal WEB server which a user accesses to register a content, and a commerce server for managing information on the user and information on the content use/purchase of the user. The content is registered and the charging information management of the content is carried out by the processing of setting an authentication key for the charging to the user when the user registers the content, the processing of authenticating the user accessing the system by using the authentication key, the processing of allowing registration when permission is given on the basis of the authentication, and the processing of setting compensation information for the registration and other conditions by the user.

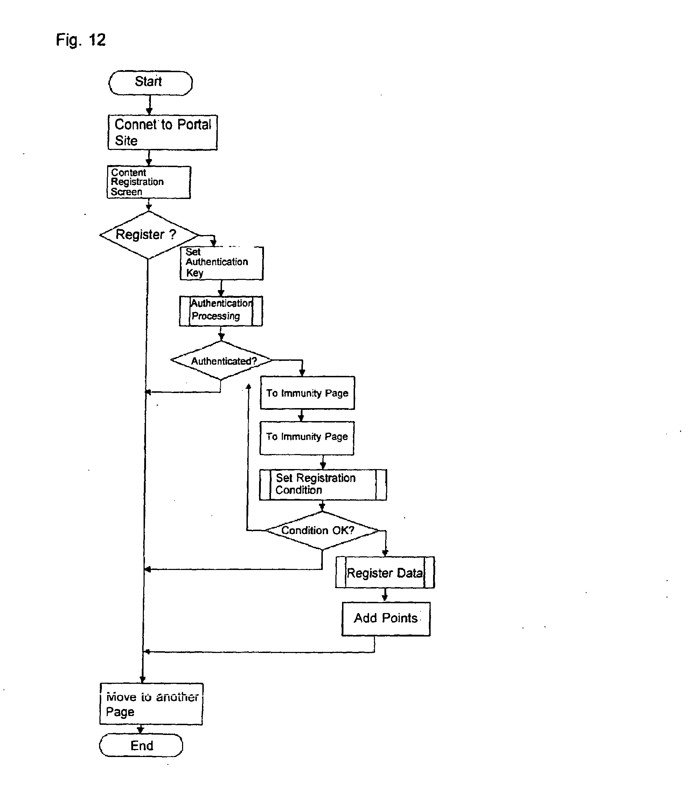

Fig. 12 is a flowchart showing the flow of the basic processing when a content is registered by using an authentication key.

First, the user accesses the portal WEB server and views a WEB page to register a content. When the user selects a menu for registering the content or the like, the information thereof is received by the portal WEB server.

If the user does not register the content, the processing that the user moves to another WEB page or returns to the preceding page is carried out.

When the content is registered, the following processing is carried out.

The commerce server accepts a processing request from the portal WEB server, and carries out authentication of the user (authentication server function).

The authentication of the charging to the user is preferably carried out with an authentication key comprising hardware (for example, USB key). That is, information for the authentication is stored in hardware such as a USB key, and it is set in the user terminal when the charging processing is carried out.

The authentication key for the authentication to the user is set when the user downloads the content.

ID for identifying the user is set in the authentication key (USB key or the like).

Subsequently, the commerce server (authentication server) carries out the authentication, judges whether the authentication result is OK or not, returns the processing result from the commerce server to the portal WEB server, and transmits to the user terminal an HTML file or the like to display the positive or negative result of the authentication. That is, the authentication results is displayed on the image plane of the user terminal.

When permission is given on the basis of the authentication, a content registration instruction is transmitted from the commerce server to the content server while indicating the storage place of the content in the content server, and then the processing goes to the registration processing. However, the processing of promoting the user to further check whether the registration should be carried out or not may be added before the processing goes to the registration processing.

When the above processing is cleared, the content to be registered is indicated at the user terminal and the registration processing is carried out.

At this time, the user indicates a condition (charging information) such as the amount of money or the like to settle the charging for the content to be registered. This is information which is set every content in accordance with the size of a content such as an image, the resolution, expiration date, points, etc.

The condition to be set here is managed in the commerce server, and the content containing the sample data of the content, the data of the content main body (or the URL information indicating the location of the content main body or the content location ID for identifying the location of the content main body on the network), the charging information on the compensation for the content use, the attribute information on the control of the content use, and the unique ID for identifying the content is created and stored in the content server. When the content stored in the content server is encoded according to the predetermined data format (for example, data compression or encryption), the content server carries out the processing of encoding the content and then the registration processing.

Money or the frequency of available points similar to the money which is used by the user in the charging processing is set in the authentication key used by the user, and the frequency of points may be added as compensation or the like when the registration processing is carried out.

The invention according to claim 19 is implemented by combining the content registration system with the content charging system according to any one of claims 9 to 21.

### INDUSTRIAL APPLICABILITY

As described above, according to this invention, there can be implemented a content charging system in which the charging processing is carried out at the time point when the user downloads or outputs the content, and also the charging processing is carried out in accordance with the size, resolution, output method, etc. of the content when the charging is carried out, or the content is protected when no charging processing is carried out (that is, when the content is neither downloaded nor output).

Furthermore, there can be implemented a content charging system which is efficient to carry out the charging processing in accordance with the size, resolution, output method, etc. of the content and also in which the content user can indicate the size, the resolution, the output method, etc. at the time when the charging processing is carried out.

Still furthermore, there can be implemented a computer-readable information storage medium in which content data having the content data structure are stored, and a content charging system using the content data.

## Claims

1. A computer-readable information recording medium having content data stored therein, **characterized in that** a content such as an image or the like which comprises computer-readable data contains sample data of the content, the data of the main body of the content, charging information on the compensation for use of the content, attribute information on the control of use of the content, and a unique ID for identifying the content.

2. A computer-readable information recording medium having content data stored therein, **characterized in that** a content such as an image or the like which comprises computer-readable data contains sample data of the content, URL information indicating the location of the content main body, charging information on the compensation for use of the content, attribute information on the control of use of the content, and a unique ID for identifying the content.

3. A computer-readable information recording medium having content data stored therein, **characterized in that** a content such as an image or the like which comprises computer-readable data contains sample data of the content, a content location ID for identifying the location of the content main body on a network, charging information on the compensation for use of the content, attribute information on the control of use of the content and a unique ID for identifying the content.

4. The content-stored computer-readable information recording medium according to any one of claims 1 to 3, wherein the charging information contained in the content contains one or a plurality of the size, expiration date, resolution, output method and other conditions of the content.

5. The content-stored computer-readable information recording medium according to any one of claims 1 to 4, wherein the content main body is a content which has been subjected to the processing of compressing a data amount, and has such a data format that upon utilizing the content main body after charging processing as a compensation for use of the content, a decode key received from the content server to decode and output the content.

6. The content-stored computer-readable information recording medium according to any one of claims 1 to 5, wherein the information recording medium is a content server for storing contents such as images, etc. on a computer network.

7. An content charging system, **characterized by** comprising:, on a computer network,
a content server for storing contents such as images, etc.;
a portal WEB server which a user accesses to use and purchase a content; and
a commerce server for managing information on the user and information on content use/purchase of the user, wherein the content contains sample data of the content, data of the content main body, charging information on the compensation for use of the content, attribute information on control of use of the content, and a unique ID to identify the content, and wherein charging at the output time is carried out by the processing of displaying the content at a user terminal by a user, the processing of setting an-authentication key for charging to the user and the control of use of the content when the user downloads the content, the processing of carrying out authentication of the user accessing the system by using the authentication key, the processing of transmitting the content to the user terminal and detecting attribute information contained in the content at the user terminal in response to use request information of the content indicated and transmitted by the authenticated user, and the processing of decoding the content on the basis of the use request information and outputting the content when the charging processing based on the use request information is authenticated and the content is output, whereas when the charging processing based on the use request information is not authenticated, it is impossible to decode and output the content.

8. A content charging system, **characterized by** comprising:, on a computer network,
a content server for storing contents such as images, etc.;
a portal WEB server which a user accesses to use and purchase a content; and
a commerce server for managing information on users and information on content use/purchase of the users, wherein the content contains sample data of the content, URL information for location of the content main body, charging information on the compensation for use of the content, attribute information on the control of use of the content, and a unique ID to identify the content, and wherein the charging at the output time is carried out by the processing of displaying the content at a user terminal by a user, the processing of setting an authentication key for charging to the user and the control of use of the content when the user downloads the content, the processing of carrying out authentication of the user accessing the system by using the authentication key, the processing of transmitting the content to the user terminal and detecting attribute information contained in the content at the user terminal in response to use request information of the content indicated and transmitted by the authenticated user, and the processing of decoding the content on the basis of the use request information and outputting the content when the charging processing based on the use request information is authenticated and the content is output, whereas when the charging processing based on the use request information is not authenticated, it is impossible to decode and output the content.

9. A content charging system, **characterized by** comprising:, on a computer network,
a content server for storing contents such as images, etc.;
a portal WEB server which a user accesses to use and purchase a content; and
a commerce server for managing information on users and information on content use/purchase of the users, wherein the content contains sample data of the content, content location ID for identifying the location of the content main body on the network, charging information on the compensation for use of the content, attribute information on the control of use of the content, and a unique ID to identify the content, and wherein the charging at the output time is carried out by the processing of displaying the content at a user terminal by a user, the processing of setting an authentication key for charging to the user and the control of use of the content when the user downloads the content, the processing of carrying out authentication of the user accessing the system by using the authentication key, the processing of transmitting the content to the user terminal and detecting attribute information contained in the content at the user terminal in response to use request information of the content indicated and transmitted by the authenticated user, and the processing of decoding the content on the basis of the use request information and outputting the content when the charging processing based on the use request information is authenticated and the content is output, whereas when the charging processing based on the use request information is not authenticated, it is impossible to decode and output the content.

10. The content charging system according to any one of claims 7 to 9, wherein the processing of setting an authentication key for charging to the user and the control of use of the content when the user downloads the content, the processing of carrying out authentication of the user accessing the system by using the authentication key, the processing of transmitting the content to the user terminal and detecting attribute information contained in the content at the user terminal in response to use request information of the content indicated and transmitted by the authenticated user, and the charging processing at the time when the content is received at the user terminal are carried out, and then after the charging processing based on the use request information is authenticated, the user is allowed to select whether the processing of outputting the content is carried out or not.

11. A content charging system according to any one of claims 7 to 9, wherein the output of the content is an output from a printer connected to the user terminal.

12. A content charging system according to any one of claims 7 to 9, wherein the output of the content is an output to an external storage device equipped to the user terminal or an external storage device connected to the user terminal.

13. A content charging system according to any one of claims 7 to 12, wherein the use request information indicated and transmitted by the user contains information for indicating one or a plurality of the size, expiration date, resolution, output method and other conditions of the content, and wherein charging at the output time is carried out by the processing of decoding the content on the basis of the use request information and outputting the content when the charging processing based on the use request information containing the conditions indicated by the user is authenticated and the content is output, and when the charging processing based on the use request information is not authenticated, it is impossible to decode and output the content.

14. A content charging system according to any one of claims 7 to 13, wherein the output of the content can be output by using dedicated software having a function of detecting attribute information contained in the content and a decoding function.

15. A content charging system according to any one of claims 7 to 14, wherein the authentication key for the charging to the user and the control of use of the content is a USB key or other types of hardware keys.

16. A content charging system according to any one of claims 7 to 15, wherein the authentication key for the charging to the user and the control of use of the content is achieved through a network when accessing the commerce server to download or output the content.

17. A content charging system according to any one of claims 7 to 16, wherein the system is further equipped with a content output shop terminal that is provided by the system manager side and is connected to the computer network, and the user is allowed to download or output the content by providing the authentication key to the content output shop terminal.

18. A content registering/charging system, **characterized by** comprising, on a computer network, a content server for storing a content such as an image or the like, a portal WEB server which a user accesses to register a content, and a commerce server for managing information on the user and information on content use/purchase of the user, wherein content registration and content charging information management are carried out by the processing of setting an authentication key for the charging to the user and control of use of the content when the user registers the content, the processing of carrying out authentication of the user accessing the system with the authentication key, the processing of allowing registration when the registration is permitted on the basis of the authentication, and the processing of setting compensation information for the registration and other conditions by the user.

19. A content registering/charging system according to any one of claims 7 to 18, wherein the content registration and content charging information management are carried out by the processing of setting an authentication key for the charging to the user and control of use of the content when the user registers the content, the processing of carrying out authentication of the user accessing the system with the authentication key, the processing of allowing registration when the registration is permitted on the basis of the authentication, and the processing of setting compensation information for the registration and other conditions by the user.
